# EUROPÄISCHE PATENTANMELDUNG

(11) **EP 1 592 119 A2**
(43) Veröffentlichungstag der Anmeldung: **02.11.2005**
(21) Anmeldenummer: 05008302.1
(22) Anmeldetag: 15.04.2005
(51) Int. Cl.: H02M 3/28

(54) **Elektrischer Schaltwandler mit hoher Eingangsspannung**

(30) Priorität: 28.04.2004 DE 102004020792
(71) Anmelder: Leopold Kostal GmbH & Co. KG, 58507 Lüdenscheid (DE); Fraunhofer-Gesellschaft zur Förderung der angewandten Forschung e.V., 80686 München (DE)
(72) Erfinder: Röttger, Dieter, 58730 Fröndenberg (DE); Schmidt, Heribert, Dr., 79312 Emmendingen (DE)
(74) Vertreter: Kerkmann, Detlef

(57) **Zusammenfassung**

Beschrieben wird ein elektrischer Schaltwandler der mehrere Halbleiterschalter aufweist, die mehrere primärseitige Wandlertransformatorwicklungen getaktet bestromen und mit einem die Halbleiterschalter steuernden Schaltregler, wobei der Schaltwandler einen Wandlertransformator mit mindestens zwei Primärwicklungen aufweist, wobei jeder Primärwicklung je ein Kondensator und je ein Halbleiterschalter zugeordnet ist, wobei der Schaltregler die den Primärwicklungen zugeordneten Halbleiterschalter synchron taktet, und wobei jeder Primärwicklung eine Diode zugeordnet ist, die einen Ladungsausgleich zwischen den Primärwicklungen verhindert.

Damit kann sowohl eine hohe Spannungsfestigkeit realisiert werden als auch eine Symmetrierung von in Reihe geschalteten Kondensatoren vorgenommen werden.

## Beschreibung

Die vorliegende Erfindung betrifft einen elektrischen Schaltwandler, der mehrere Halbleiterschalter aufweist, die mehrere primärseitige Wandlertransformatorwicklungen getaktet bestromen, und mit einem die Halbleiterschalter steuernden Schaltregler.

Derartige Schaltwandler sind dafür vorgesehen, aus Gleichspannungen von mehreren hundert Volt, wie sie beispielsweise von größeren Solargeneratoranordnungen geliefert werden, Hilfsspannungen mit geringen Leistungen z. B. zum Betrieb von elektronischen Schaltungen zu erzeugen.

Prinzipiell werden für Anwendungen, bei denen Hilfsspannungen erzeugt werden, oft Schaltnetzteile mit Sperrwandlern eingesetzt. Diese eignen sich bei geringem Leistungsbedarf, sind einfach aufgebaut und kostengünstig sowie robust und betriebssicher.

Problematisch bei bestimmten Anwendungen wie z. B. der Photovoltaik ist, dass solche Schaltungen für Eingangsspannungen von bis zu 1000 V geeignet sein müssen. Dabei sind Leistungshalbleiter erforderlich, die eine wesentlich größere Spannungsfestigkeit aufweisen, da diese, wenn sie nicht leiten, zusätzlich zur Eingangsspannung noch die rückübersetzte Spannung von der Sekundär- auf die Primärwicklung standhalten müssen. Solche Halbleiterschalter (mit Spannungsfestigkeiten bis zu 1300 V) sind aber mit den geforderten dynamischen Eigenschaften kaum verfügbar oder aber sehr teuer.

Weitere Schaltnetzteil-Topologien sind bekannt, jedoch aufwendiger und kommen daher für den Low-Cost-Einsatz kaum in Frage.

Bei Wechselrichtern mit hohen Zwischenkreisspannungen werden häufig zwei Kondensatoren in Reihe im Zwischenkreis eingesetzt. Der Grund hierfür ist zum einen die begrenzte Spannungsfestigkeit von Kondensatoren, zum anderen wird oft eine Mittelanzapfung benötigt. Damit sich bei dieser Reihenschaltung die Spannungen nicht ungleichmäßig aufteilen, werden zur Symmetrierung meist ohmsche Widerstände eingesetzt. Diese sind jedoch groß, kostspielig, aufwendig in der Montage, verursachen Verlustleistung und verringern dadurch den Wirkungsgrad.

Aus dem Bereich der Batterieladetechnik sind Schaltungstopologien bekannt, bei denen mehrere Wicklungen eines Transformators synchron auf unterschiedliche Energiespeicher aufgeschaltet werden. Diese unterscheiden sich aber von der erfindungsgemäßen Schaltung grundsätzlich, da mit diesen vorbekannten Schaltungen ein Ladungsausgleich bewirkt wird, also von einer Primärwicklung zu einer anderen Energie übertragen wird.

Die europäische Patentschrift EP 0 767 983 B1 beschreibt eine derartige Schaltung aus dem Bereich Ladungstechnik. Allerdings läßt diese Schaltung nicht nur eine Entladung der Energiespeicher zu, sondern gleicht auch Ladungen aus, was in der hier angestrebten Wechselrichter-Applikation Probleme bereiten und zu einem sehr großen Transformator führen würde.

Aus der EP 0 775 378 B1 ist eine weitere Schaltung aus dem Bereich Ladungstechnik bekannt. Ein Ladungsausgleich, der in einer Wechselrichter-Applikation Probleme bereiten kann, findet hier ebenfalls statt.

Es stellte sich daher die Aufgabe, einen einfachen und kostengünstig aufgebauten elektrischen Schaltwandler zu schaffen, der für hohe Eingangsspannungen (z. B. bis zu 1000 V) geeignet ist und gleichzeitig die Symmetrierung des Zwischenkreises vornehmen kann.

Diese Aufgabe wird erfindungsgemäß dadurch gelöst, dass der Schaltwandler einen Wandlertransformator mit mindestens zwei Primärwicklungen aufweist, dass jeder Primärwicklung je ein Kondensator und je ein Halbleiterschalter zugeordnet ist, dass der Schaltregler die den Primärwicklungen zugeordneten Halbleiterschalter synchron taktet und dass jeder Primärwicklung eine Diode zugeordnet ist, die einen Ladungsausgleich zwischen den Primärwicklungen verhindert.

Besonders vorteilhaft ist hierbei, dass die Spannungsfestigkeit der Sperrwandlerbauteile, insbesondere die der Leistungshalbleiter, nur ein Bruchteil der Spannungsfestigkeit bei bekannten Sperrwandlertopologien entsprechen muss, wodurch vergleichsweise kostengünstige Halbleiterschalter verwendet werden können.

Ebenfalls vorteilhaft ist, dass je Primärwicklung des Wandlertransformators nur ein Halbleiterschalter benötigt wird.

Die Zeichnung zeigt zwei Ausführungsbeispiele des erfindungsgemäßen Schaltwandlers.

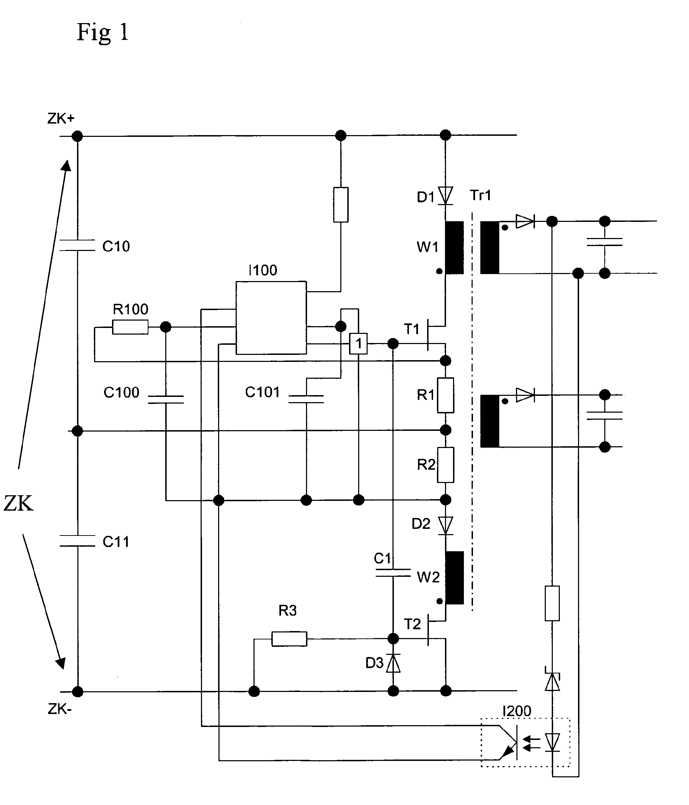

Figur 1 zeigt die für die Beschreibung der Erfindung wesentlichen Schaltungsteile eines elektrischen Schaltwandlers für hohe Eingangsspannungen, der zwei Primärwicklungen aufweist.

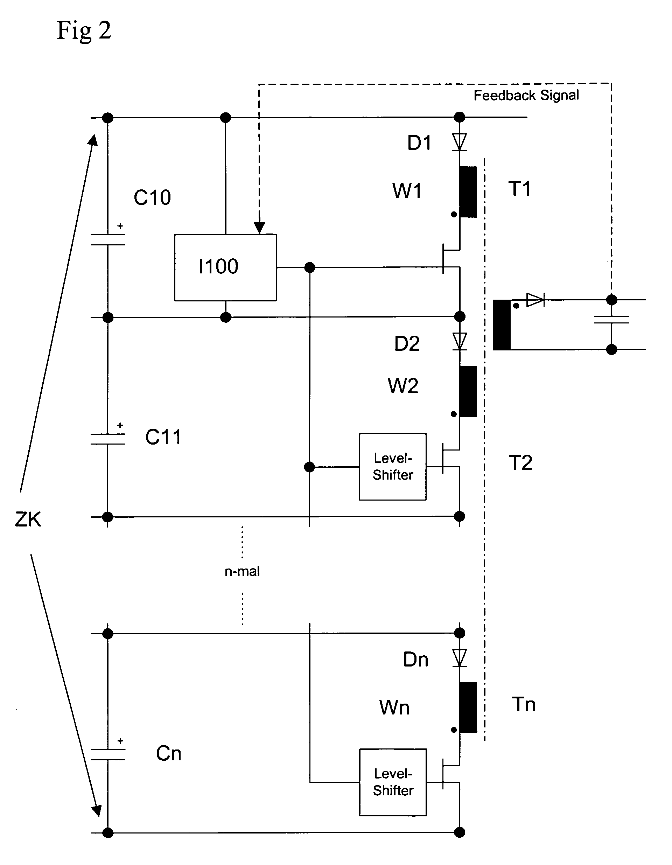

Die Figur 2 zeigt in einer schematischen Darstellung, wie der anhand der Figur 1 beschriebene Schaltwandler mit mehr als zwei Primärkreisen ausgeführt werden kann. Hierbei sind gleiche bzw. gleichwirkende Schaltungselemente mit den gleichen Bezugszeichen wie in der Figur 1 bezeichnet worden. Zur deutlicheren Darstellung wurden Schaltungselemente, die für das Verständnis der Verallgemeinerung nicht unbedingt erforderlich sind, in dieser Figur nicht gezeigt.

Die dem in der Figur 1 dargestellten Schaltwandler zugeführte Eingangsspannung, im folgenden als Zwischenkreisspannung (ZK) bezeichnet, liegt an einer Reihenschaltung von zwei als Energiespeicher fungierenden Kondensatoren, im folgenden Zwischenkreis-Kondensatoren (C10, C11) genannt, an.

Jeder der beiden Zwischenkreis-Kondensatoren (C10, C11) ist Teil eines von zwei primären Schaltkreisen des Schaltwandlers, zu dem des weiteren noch jeweils ein Halbleiterschalter (T1, T2) sowie eine Primärwicklung (W1, W2) eines Wandlertransformators (Tr1) gehört.

Es ist erforderlich, die beiden Primärwicklungen (W1, W2) auf einem einzigen Transformator (Tr1) aufzubringen, damit eine magnetische Kopplung der Primärspulen gegeben ist. Vorteilhaft dabei ist, dass ein zweiter Transformator überflüssig wird.

Beide primären Schaltkreise werden synchron betrieben; entsprechend werden beide Halbleiterschalter (T1, T2) synchron angesteuert. Hierzu wird vorteilhafterweise nur ein einziger Schaltregler (I100) benötigt. Mit einer Level-Shifter-Anordnung, in diesem Ausführungsbeispiel realisiert mit einem Kondensator (C1), einem Widerstand (R3) und einer Zener-Diode (D3), kann der zweite Halbleiterschalter (T2) mit einer aus dem Ansteuersignal des ersten Halbleiterschalters (T1) abgeleiteten Spannung angesteuert werden.

Ein besonderer Vorteil der beschriebenen Schaltungsanordnung besteht darin, dass der Betrieb des Schaltwandlers (1100) nicht direkt mit der Zwischenkreisspannung (ZK) erfolgt, sondern dass sich die Zwischenkreisspannung (ZK) über die beiden Zwischenkreis-Kondensatoren (C10, C11)- bezogen auf das sich am Verbindungspunkt der Zwischenkreis-Kondensatoren (C1, C11) einstellende Potenzial - in eine positive und eine negative Zwischenkreisspannung (ZK+, ZK-) aufteilt, welche an den beiden primären Schaltkreisen anliegen. Damit erhält jeder der beiden Schaltkreise praktisch nur noch die Hälfte der Zwischenkreisspannung (ZK) zugeführt, woraus eine entsprechend geringere erforderliche Spannungsfestigkeit der Halbleiterschalter (T1, T2) resultiert.

Die Symmetrierung der Zwischenkreisspannungen (ZK+, ZK-) wird insbesondere durch die mit den Primärwicklungen (W1, W2) in Reihe liegenden Dioden (D1, D2) bewirkt.

Ist die Zwischenkreisspannung unsymmetrisch, so wird nur von dem Zwischenkreis-Kondensator (C10 bzw. C11) Energie entnommen, der die höhere Spannung aufweist, wobei nur der zugehörige Zwischenkreis-Kondensator (C10 bzw. C11) belastet wird. Die Dioden (D1 bzw. D2) verhindern eine direkte Rückspeisung über die Primärwicklungen und somit auch einen direkten Ladungsausgleich, wie er beim eingangs zitierten Stand der Technik bewußt herbeigeführt wurde. Damit ist sichergestellt, dass der Transformators (Tr1) nur für die Leistung dimensioniert sein muss, die maximal von der Sekundärseite entnommen wird und dass er nicht für einen etwaigen Ladungsaustausch größer ausgelegt werden muss.

Ein Ladungsausgleich über die beiden Primärwicklungen (W1, W2) würde einen erheblich größeren Übertrager erfordern.

Der verwendete Schaltregler (I100) besitzt vorteilhafterweise eine unterlagerte Stromregelung. Mittels zweier in Reihe geschalteter Shuntwiderstände (R1, R2) kann der Schaltreglers (I100) die Summe des Stromes und damit ein Maß für die Größe des magnetischen Gesamtflusses im Transformator (Tr1), der durch beide Primärwicklungen (W1, W2) verursacht wird, erfassen. Hierfür liegt die Masse des Schaltreglers (1100) am unteren Shuntwiderstand (R2) und damit geringfügig unterhalb des Potenzials am Verbindungspunkt der Zwischenkreis-Kondensatoren (C10, C11). Eine Verfälschung des abgetasteten Stromes durch den Eigenverbrauch des Schaltreglers (I100), der durch die zweite Primärwicklung (W2) fließt und nicht über die ShuntWiderstände (R1, R2) erfaßt wird, ist hier sehr gering und vernachlässigbar.

Die Übermittlung der Regelgröße von der Sekundär- auf die Primärseite erfolgt hier, wie bei Sperrwandlern vielfach üblich, über einen Optokoppler (I200).

Die Figur 2 zeigt anhand eines vereinfachten Schaltbildes, wie der in der Figur 1 dargestellte Schaltwandler mit n (mit n>2) Primärkreisen ausgeführt werden kann. Die dem Schaltwandler zugeführte Zwischenkreisspannung verteilt sich hier auf eine Reihenschaltung von n Kondensatoren (C10, C11, Cn), wodurch sich die Spannungsbelastung jedes Primärkreises entsprechend verringert. Je zusätzlichem Primärkreis wird weiterhin je ein Level-Shifter, ein zusätzlicher Halbleiterschalter (Tn), eine weitere Diode (Dn), sowie eine weitere Primärwicklung (Wn) am Wandlertransformator (Tr1) benötigt. Die Funktionsweise entspricht hierbei der der in der Figur 1 beschriebenen Schaltung, wobei hier der Schaltregler n (n> 2) statt - wie dargestellt - zwei Primärkreise synchron steuert.

### Bezugszeichen

- C1, D3, R3: Level-Shifter
- C10, C11, Cn: Zwischenkreis-Kondensatoren
- D1, D2, Dn: Dioden
- I100: Schaltregler
- I200: Optokoppler
- R1, R2: Shuntwiderstände
- T1, T2, Tn: Halbleiterschalter
- Tr1: Transformator
- W1, W2, Wn: Primärwicklungen
- ZK: Zwischenkreisspannung
- ZK+: positive Zwischenkreisspannung
- ZK-: negative Zwischenkreisspannung

## Patentansprüche

1. Elektrischer Schaltwandler,
der mehrere Halbleiterschalter aufweist, die mehrere primärseitige Wandlertransformatorwicklungen getaktet bestromen,
und mit einem die Halbleiterschalter steuernden Schaltregler,
**dadurch gekennzeichnet,**
**dass** der Schaltwandler einen Wandlertransformator (Tr) mit mindestens zwei Primärwicklungen (W1, W2, Wn) aufweist, dass jeder Primärwicklung je ein Kondensator (C10, C11, Cn) und je ein Halbleiterschalter (T1, T2, Tn) zugeordnet ist, dass der Schaltregler (I100) die den Primärwicklungen (W1, W2, Wn) zugeordneten Halbleiterschalter (T1, T2, Tn) synchron taktet und dass jeder Primärwicklung eine Diode (D1, D2, Dn) zugeordnet ist, die einen Ladungsausgleich zwischen den Primärwicklungen (W1, W2, Wn) verhindert.

2. Elektrischer Schaltwandler nach Anspruch 1, **dadurch gekennzeichnet, dass** die den Primärwicklungen (W1, W2, Wn) zugeordneten Kondensatoren (C10, C11, Cn) in Reihe geschaltet sind, und dass die dem Schaltwandler zugeführte Zwischenkreisspannung (ZK) an den in Reihe geschalteten Kondensatoren (C10, C11, Cn) anliegt.

3. Elektrischer Schaltwandler nach Anspruch 1, **dadurch gekennzeichnet, dass** der Schaltregler (I100) den zweiten und gegebenenfalls weitere Halbleiterschalter (T2, Tn) über jeweils eine Level-Shifter-Anordnung (C1, D3, R3), insbesondere bestehend aus einer RC-Kombination (C1, R3) und einer Zener-Diode (D3), ansteuert.

4. Elektrischer Schaltwandler nach Anspruch 1, **dadurch gekennzeichnet, dass** der Schaltwandler einen Wandlertransformator (Tr) mit genau zwei Primärwicklungen (W1, W2) aufweist.

5. Elektrischer Schaltwandler nach Anspruch 4, **dadurch gekennzeichnet, dass** der Schaltregler (I100) eine unterlagerte Stromregelung aufweist.

6. Elektrischer Schaltwandler nach Anspruch 4 oder 5, **dadurch gekennzeichnet, dass** die Summe der Ströme, die durch die beiden Primärwicklungen (W1, W2) des Wandlertransformators (Tr) fließt, **dadurch** erfaßt wird, dass zwei Widerstände (R1, R2) in den Primärkreisen in Reihe geschaltet sind und dabei jeweils mit einer Seite an der Mittelanzapfung des Zwischenkreises anliegen.

7. Elektrischer Schaltwandler nach Anspruch 6, bei dem der Schaltregler (I100) als Schaltregler-IC ausgeführt ist, das den Strom erfassen kann, indem eine virtuelle Masse für das Schaltregler-IC (I100) erzeugt wird, an der der Masseanschluß des Schaltregler-IC sowie der Punkt der Widerstände (R1, R2) anliegt, der das negativste Potenzial hat, und bei dem zusätzlich der Stromeingang den Punkt der Widerstände abtastet, der das höchste Potenzial aufweist.
